# EUROPEAN PATENT APPLICATION

(11) **EP 3 211 314 A1**
(43) Date of publication of application: **30.08.2017**
(21) Application number: 17155415.7
(22) Date of filing: 09.02.2017
(51) Int. Cl.: F23R 3/00, F01D 5/18, F15D 1/00

(54) **COMPONENTS FOR A GAS TURBINE ENGINE AND CORRESPONDING COOLING METHOD**

(30) Priority: 13.02.2016 US 201615043511
(71) Applicant: General Electric Company, Schenectady, NY 12345 (US)
(72) Inventor: BUNKER, Ronald Scott, West Chester, OH 45069 (US); BAILEY, Jeremy Clyde, Cincinnati, OH 45215 (US)
(74) Representative: Williams, Andrew Richard

(57) **Abstract**

An apparatus and method for an engine component (140) having a hot surface (154) adjacent a hot combustion gas flow (H) and a cooling surface (152) adjacent a cooling fluid flow (C) can include at least one dimple (160) for enhancing the cooling along the cooling surface (152). The dimple (160) can be shaped having a head (162) and a tail (164) with the head (162) disposed upstream of the tail (164) to provide for reduced dust collection along the engine component (140).

## Description

### BACKGROUND OF THE INVENTION

Turbine engines, and particularly gas or combustion turbine engines, are rotary engines that extract energy from a flow of combusted gases passing through the engine in a series of compressor stages, which include pairs of rotating blades and stationary vanes, through a combustor, and then onto a multitude of turbine blades.

Gas turbine engines for aircraft are designed to operate at high temperatures to maximize engine efficiency, so cooling of certain engine components, such as the high pressure turbine and the low pressure turbine, can be necessary. Typically, cooling is accomplished by ducting cooler air from the high and/or low pressure compressors to the engine components that require cooling. Temperatures in the high pressure turbine are around 1000 °C to 2000 °C and the cooling air from the compressor is around 500 °C to 700 °C. While the compressor air is a high temperature, it is cooler relative to the turbine air, and can be used to cool the turbine.

Concavities, dimples, or depressions on a surface adjacent to the cooling flow have been used as a thermal cooling feature. The concavities tend to generate an unsteady or vortical airflow as the cooling flow passes through or over them, which can lead to reduction of dust build-up along the engine component.

### BRIEF DESCRIPTION OF THE INVENTION

In one aspect, embodiments of the invention relate to a component for a gas turbine engine that generates a hot combustion gas flow and provides a cooling flow. The component includes a wall separating the hot combustion gas flow from the cooling fluid flow and having a hot surface along with the hot combustion has flow and a cooling surface facing the cooling fluid flow. The component further includes at least one dimple provided in the cooling surface having a head and a tail with the head disposed upstream of the tail relative to a flow direction of the cooling fluid flow.

In another aspect, embodiments of the invention relate to a component for a gas turbine engine having a wall separating a hot combustion gas flow and a cooling fluid flow and having at least one dimple provided in the wall confronting the cooling fluid flow and having a head and a tail with the head disposed upstream of the tail relative to the direction of the cooling fluid flow.

In yet another aspect, embodiments of the invention relate to a method of cooling an engine component having a cooling surface having at least one dimple with a head and a tail, having the head disposed upstream of the tail relative to a flow direction. The method includes passing a cooling fluid flow along the cooling surface and passing at least a portion of the cooling fluid flow into the dimple. Passing the cooling fluid into the dimple minimizes dust collection along the cooling surface.

### BRIEF DESCRIPTION OF THE DRAWINGS

In the drawings:
FIG. 1 is a schematic cross-sectional diagram of a gas turbine engine for an aircraft.
FIG. 2 is a side section view of a combustor of the gas turbine engine of FIG. 1 illustrating multiple engine components.
FIG. 3 is a perspective view of an engine component in the form of a turbine blade of the engine of FIG. 2 with cooling air inlet passages.
FIG. 4 is a perspective view of a portion of the engine component of FIG. 3 having a plurality of dimples.
FIG. 5 is a top view of the engine component of FIG. 3 having the plurality of dimples of FIG. 4.
FIG. 6 is a side view of the dimples of FIG. 4 illustrating the shape and disposition of the dimples.
FIGS. 7A - 7C are top views of three different tail shapes for the dimples of FIG. 4.
FIGS. 8A and 8B are side views of the tail having different non-linear profiles.

### DESCRIPTION OF EMBODIMENTS OF THE INVENTION

The described embodiments of the present invention are directed to a dimple disposed on a cooling surface of a component of a gas turbine engine. For purposes of illustration, the present invention will be described with respect to the turbine for an aircraft gas turbine engine. It will be understood, however, that the invention is not so limited and may have general applicability within an engine, including compressors, as well as in non-aircraft applications, such as other mobile applications and non-mobile industrial, commercial, and residential applications.

As used herein, the term "forward" or "upstream" refers to moving in a direction toward the engine inlet, or a component being relatively closer to the engine inlet as compared to another component. The term "aft" or "downstream" used in conjunction with "forward" or "upstream" refers to a direction toward the rear or outlet of the engine relative to the engine centerline. "Upstream" as used herein also refers to the relative local position of the dimple head and tail, regardless of how the dimple is oriented or placed with respect to the engine inlet.

Additionally, as used herein, the terms "radial" or "radially" refer to a dimension extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding of the present invention, and do not create limitations, particularly as to the position, orientation, or use of the invention. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

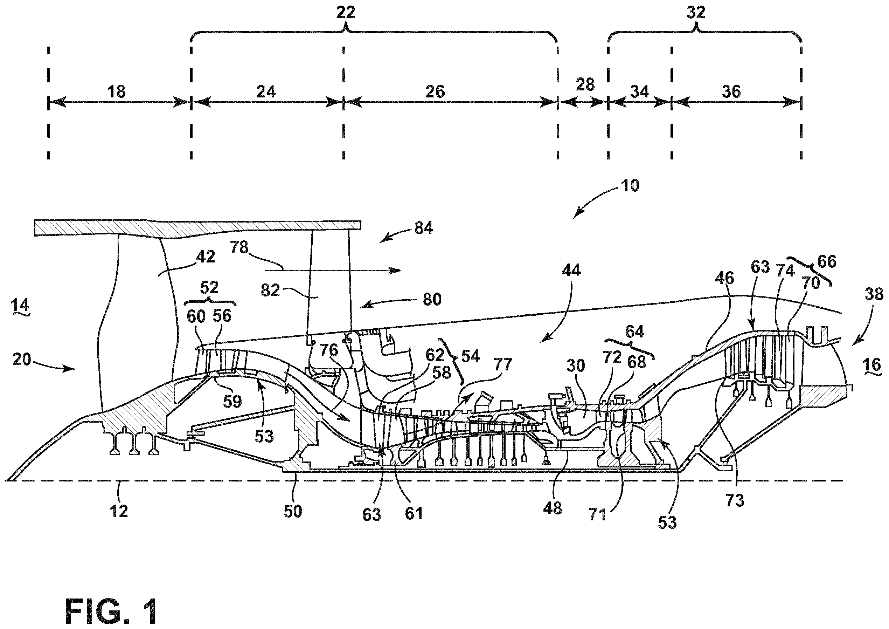

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating blades 56, 58. It is noted that the number of blades, vanes, and compressor stages shown in FIG. 1 were selected for illustrative purposes only, and that other numbers are possible.

The blades 56, 58 for a stage of the compressor can be mounted to a disk 59, which is mounted to the corresponding one of the HP and LP spools 48, 50, with each stage having its own disk 59, 61. The vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine vanes 72, 74 can be provided in a ring and can extend radially outwardly relative to the centerline 12, while the corresponding rotating blades 68, 70 are positioned downstream of and adjacent to the static turbine vanes 72, 74 and can also extend radially outwardly relative to the centerline 12, from a blade platform to a blade tip. It is noted that the number of blades, vanes, and turbine stages shown in FIG. 1 were selected for illustrative purposes only, and that other numbers are possible.

The blades 68, 70 for a stage of the turbine can be mounted to a disk 71, which is mounted to the corresponding one of the HP and LP spools 48, 50, with each stage having its own disk 71, 73. The vanes 72, 74 for a stage of the compressor can be mounted to the core casing 46 in a circumferential arrangement.

The portions of the engine 10 mounted to and rotating with either or both of the spools 48, 50 are also referred to individually or collectively as a rotor 53. The stationary portions of the engine 10 including portions mounted to the core casing 46 are also referred to individually or collectively as a stator 63.

In operation, the airflow exiting the fan section 18 is split such that a portion of the airflow is channeled into the LP compressor 24, which then supplies pressurized ambient air 76 to the HP compressor 26, which further pressurizes the ambient air. The pressurized air 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

A remaining portion of the airflow 78 bypasses the LP compressor 24 and engine core 44 and exits the engine assembly 10 through a stationary vane row, and more particularly an outlet guide vane assembly 80, comprising a plurality of airfoil guide vanes 82, at the fan exhaust side 84. More specifically, a circumferential row of radially extending airfoil guide vanes 82 are utilized adjacent the fan section 18 to exert some directional control of the airflow 78.

Some of the ambient air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally the combustor 30 and components downstream of the combustor 30, especially the turbine section 32, with the HP turbine 34 being the hottest portion as it is directly downstream of the combustion section 28. Other sources of cooling fluid can be, but is not limited to, fluid discharged from the LP compressor 24 or the HP compressor 26. This fluid can be bleed air 77 which can include air drawn from the LP or HP compressors 24, 26 that bypasses the combustor 30 as cooling sources for the turbine section 32. This is a common engine configuration, not meant to be limiting.

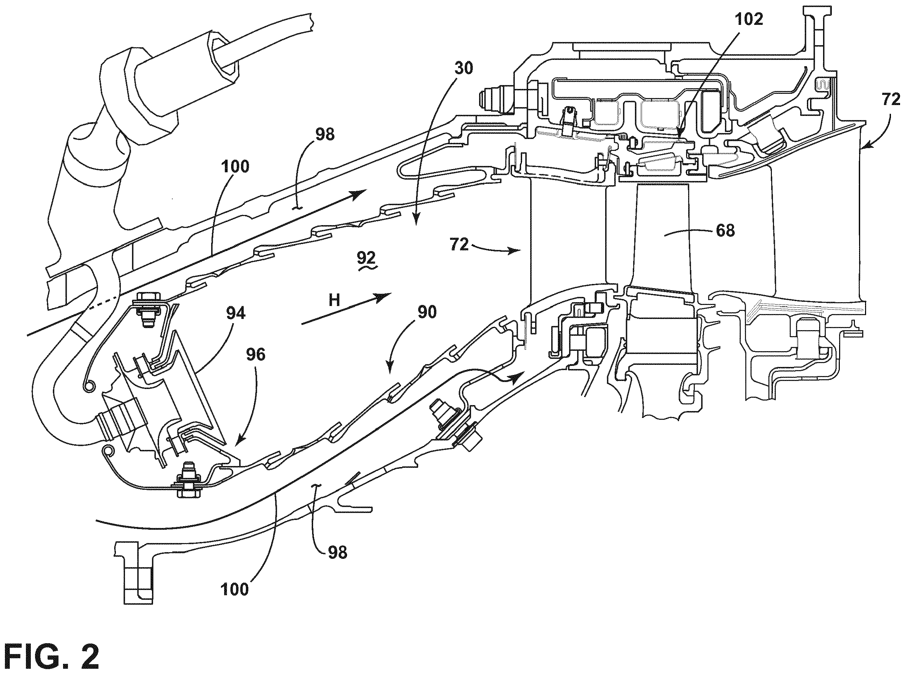

FIG. 2 is a side section view of the combustor 30 and HP turbine 34 of the engine 10 from FIG. 1. The combustor 30 includes a combustor liner 90 defining a combustion chamber 92. A combustor nozzle 94 provides a flow of gas or an air/gas mixture for combusting within the combustion chamber 92. A deflector 96 is provided at the intersection between the nozzle 94 and the combustion liner 90 for directing the combusted flow aft. A cooling flow 100 can bypass the combustor 30 through an annular bypass channel 98, being provided to one or more engine components requiring cooling.

Adjacent to the turbine blade 68 of the turbine 34 in the axial direction are sets of static turbine vanes 72 forming nozzles. The nozzles turn combustion gas so that the maximum energy can be extracted by the turbine 34. A shroud assembly 102 is adjacent to the rotating blade 68 to minimize flow loss in the turbine 34. Similar shroud assemblies can also be associated with the LP turbine 36, the LP compressor 24, or the HP compressor 26.

One or more of the engine components of the engine 10 has a cooled wall in which various embodiments disclosed further herein can be utilized. Some non-limiting examples of the engine component having a film-cooled wall can include the blades 68, 70, vanes or nozzles 72, 74, combustor deflector 96, combustor liner 90, or shroud assembly 102, described in FIGS. 1-2. Other non-limiting examples where film cooling is used include turbine transition ducts, struts, and exhaust nozzles.

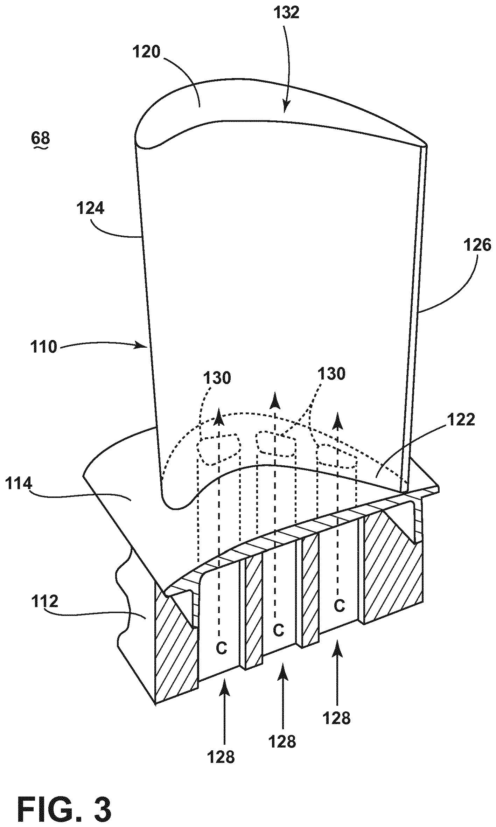

FIG. 3 is a perspective view of an engine component in the form of one of the turbine blades 68 of the engine 10 of FIG. 1. It should be understood that the blade 68 as described herein is exemplary, and the concepts disclosed extend to additional engine components and are not limited to the blade 68. The aspects of the invention are discussed in relation to a blade 68 to facilitate the reader's understanding of the invention. The turbine blade 68 includes a dovetail 112 and an airfoil 110. The airfoil 110 extends from a tip 120 to a root 122 defining a span-wise direction and extends from a leading edge 124 to a trailing edge 126 in a chord-wise direction. The dovetail 112 further includes a platform 114 integral with the airfoil 110 at the root 122, which helps to radially contain the turbine airflow. The dovetail 112 can be configured to mount to a turbine rotor disk 51 on the engine 10. The dovetail 112 comprises at least one inlet passage 128, exemplarily shown as three inlet passages 128, each extending through the dovetail 112 to provide internal fluid communication with the airfoil 110 at one or more passage outlets 130. It should be appreciated that the dovetail 112 is shown in cross-section, such that the inlet passages 128 are housed within the body of the dovetail 112.

The airfoil 110 can further define an interior 132, such that a flow of cooling fluid C can be provided through the inlet passages 128 and to the interior 132 of the airfoil 110. Thus, the flow of cooling fluid flow C can be fed through the inlet passages 128, exiting the outlets 130, and passing within the interior 132 of the airfoil. A flow of hot gas H can pass external of the airfoil 110, while the cooling fluid flow C moves within the interior 132. The flow of cooling fluid C can define a cooling fluid flow path in the direction of the cooling fluid flow C.

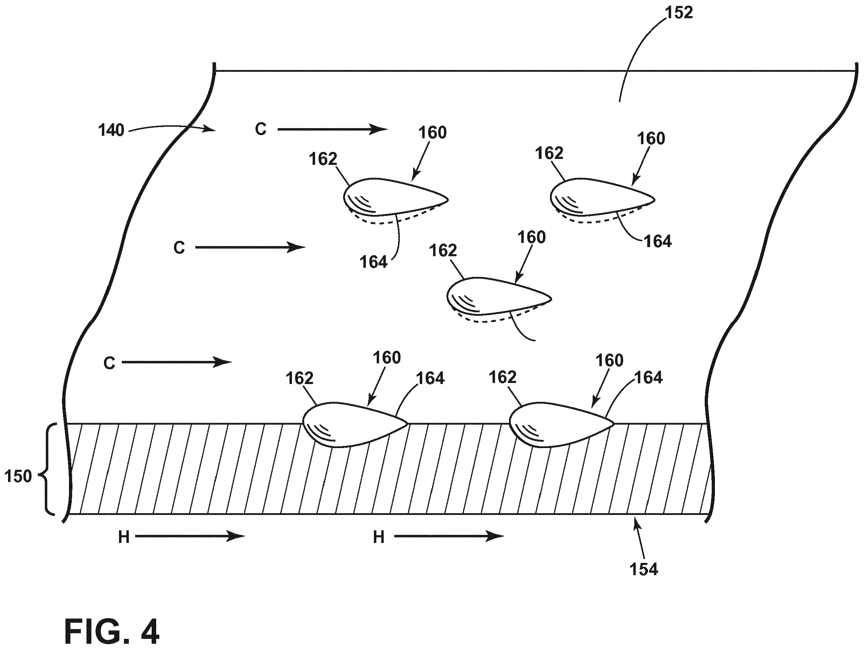

FIG. 4 is a schematic view showing a portion of an engine component 140 of the engine 10 from FIG. 1, which can include a portion the blade 68 of FIG. 3. The engine component 140 can be disposed in the flow of hot gases H within the engine 10. The cooling fluid flow C can be supplied to cool the engine component 140 internally. As discussed above with respect to FIGS. 1-2, in the context of a turbine engine, the cooling fluid flow C can be any cooling fluid, but is most commonly at least one of ambient air supplied by the fan 20 which bypasses the engine core 44, fluid discharged from the LP compressor 24, or fluid discharged from the HP compressor 26.

The engine component 140 includes a wall 150 having a hot surface 154 facing the hot gas flow H and a cooling surface 152 facing the cooling fluid flow C. In the case of the gas turbine engine 10, the hot surface 154 can be exposed to gases having temperatures in the range of 1000 °C to 2000 °C, or more. Suitable materials for the wall 150 include, but are not limited to, steel, refractory metals such as titanium, or super alloys based on nickel, cobalt, or iron, and ceramic matrix composites.

The engine component 140 can define the interior 132 of the airfoil 110 of FIG. 3, adjacent the cooling surface 152. The hot surface 154 can be an exterior surface of the engine component 140, such as a pressure or suction side of the airfoil 110, for example.

The engine component 140 further includes multiple dimples 160 arranged on the cooling surface 152. Each dimple 160 is a shaped concavity or depression into the cooling surface 152 extending toward the hot surface 154. Each dimple 160 has a head 162 and a tail 164, with the head 162 disposed upstream of the tail 164 relative to the direction of the cooling flow C. The dimples 160 can be arranged on the cooling surface 152 in a patterned manner, such as aligned, staggered, offset, or otherwise in non-limiting examples.

It should be understood that the round shape for the dimples 160 is exemplary. Alternatively, the actual shape of the dimple 160 can be a teardrop, or can vary as described herein.

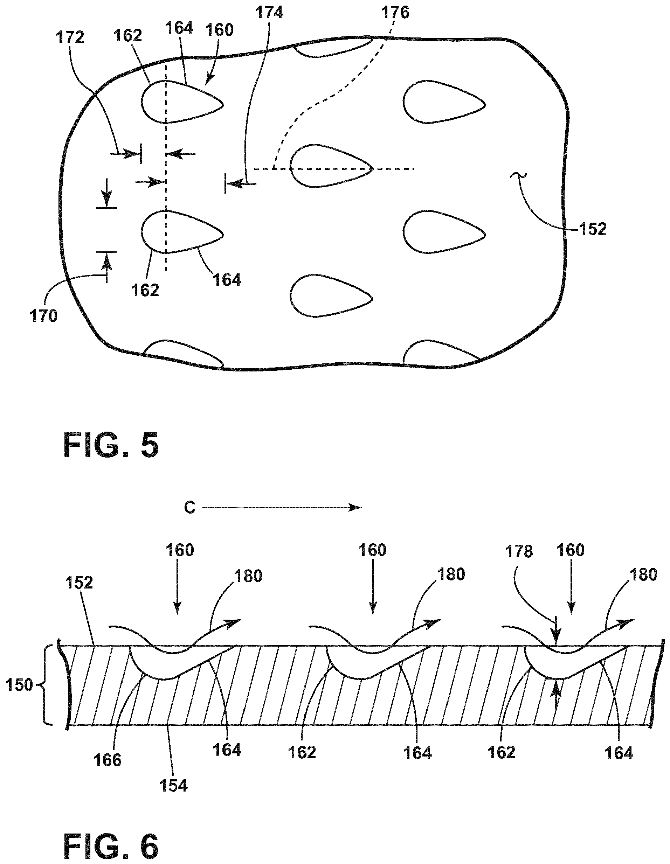

Looking at FIG. 5, each dimple 160 can be defined based upon its shape. Each dimple 160 includes a width 170 as the lateral length of the dimple 160 relative to a direction of the cooling fluid flow C. Additionally, the head 162 can have a head length 172 and the tail 164 can have a tail length 174. The head and tail lengths 172, 174 can be the length of the head and tail 162, 164, respectively in the direction of the cooling fluid flow C. Additionally, each dimple 160 can be symmetrical, having a dimple cavity body axis 176 along the center of the dimple 160 in the direction of the cooling fluid flow C. Alternatively, the dimple 160 can be asymmetrical as may be beneficial to a particular portion of an engine component 140. For example, the dimple 160 could have a curved centerline, disposed along a curved cooling surface. As such, the cavity body axis 176 would not be aligned with the direction of the cooling fluid flow C. This off-set alignment could extend among one dimple 160, a set of dimples 160, or an entire array of dimples 160 along the engine component 140. For example, the off-set alignment can be offset by +/- 20 degrees from ideal while still having sufficient dimple function.

The dimple 160 can further be defined by the width 170, head length 172, and tail length 174 relative to one another. A ratio of the width 170 to the head length 172 can be greater than 1-to-1 or can be 2-to-1, for example. Similarly, a ratio of width 170 to tail length can be greater than 1-to-2 or can be 2-to-3, for example. Furthermore, the ratio of head length 172 to tail length 174 can be 1-to-3. It should be understood, however, that these ratios are exemplary of one implementation of the dimple 160, and should not be so limited. The dimple 160 can have other ratios relative to the width 170, head length 172, and tail length 174, as may be beneficial to the particular engine component 140.

Looking at FIG. 6, a side view of the wall 150 of the engine component 140 best illustrates the profile shapes of the head 162 and the tail 164. The head 162 has an arcuate profile that can be a circular shape, such as comprising ninety degrees of a circle. As such, a three-dimensional shape of the head 162 can be a quarter of a sphere, for example. In alternative embodiments, the head 162 can be an arcuate shape varied from a circular or spherical shape. The dimple 160 can further include a depth 178. The depth 178 can be less than or equal to the width 170.

The tail 164 includes a linear profile extending from the end of the head 162 and returning to the cooling surface 152 in a sloped manner. The length of the tail 164 can be any length desirable to effect an optimal or preferential heat transfer coefficient for the wall 150.

During operation, a portion of the cooling fluid flow C can pass within the dimple 160 as a dimple flow 180, providing enhanced cooling along the cooling surface 152. The shape of the dimple 160 provides for moving air along and within the dimple 160, while utilizing the tail to minimize the collection of dust within the dimples 160 and along the engine component 140. The orientation of the head 162 upstream of the tail 164 permits a significant portion of the cooling fluid flow C to enter the dimple 160 at the head 162, while smoothly transitioning the dimple flow 180 back into the cooling fluid flow C minimizing any dust collection within the dimple 160.

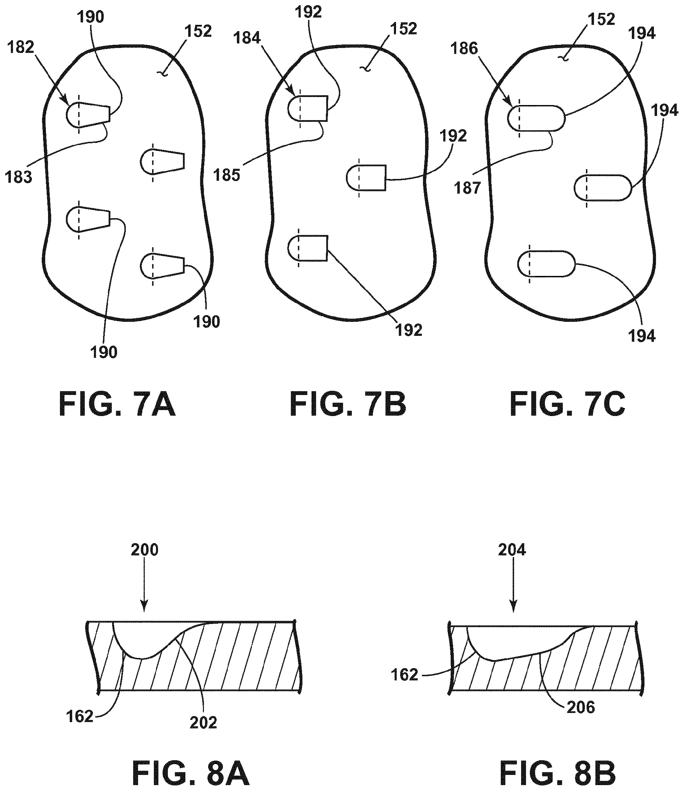

Turning now to FIGS. 7A - 7C, three different embodiments of the dimple 160 are shown having variations of the tail. While the tails can have different shapes as shown, they can still have the same profile as shown in FIG. 6. Looking at FIG. 7A, a dimple 182 can have a tail 183 having a decreasing width and terminating at a flat end 190. FIG. 7B a dimple 184 can have a tail 185 with a constant width, terminating at a second flat end 192 being linear. In FIG. 7C, a dimple 186 can have a tail 187 having a constant width extending for a portion of the tail 187 and terminating at an arcuate end 194, defining a pill-shape for the dimple from the top view as illustrated. It is further contemplated that the tails 183, 185, 187 can have an increasing width with any end as described herein.

Looking now at FIGS. 8A and 8B, additional variations for the tail 164 of FIG. 6 are shown. In FIG. 8A, a dimple 200 can have a convex shaped tail 202, having an arcuate profile that curves slightly in the direction of the cooling surface 152. In FIG. 8B, a dimple 204 can have a concave shaped tail 206, having an arcuate profile that curves slightly in the direction of the hot surface 154, opposite of that of FIG. 8A.

Additionally, a method of cooling the engine component 140 can include defining a dimple 160 having a head 162 and a tail 164 with the head 162 disposed upstream of the tail 164 can include passing a cooling fluid flow C along the cooling surface 152 and passing at least a portion of the cooling fluid flow C into the dimple 160. The method provides for minimizing dust collection along the cooling surface 152 of the engine component 140.

Thus, it should be appreciated that the dimple 160, or any variation thereof, as described herein can have the head 162 and tail 164 with the head 162 upstream of the tail 164 relative to the cooling fluid flow C. The head 162 can be shaped having a curved profile being arcuate, circular, spherical, or otherwise. The tail 164 can be shaped having a decreasing, increasing, or constant width, with a flat, tapered, or arcuate end. Additionally, the profile of the tail 164 can be curved, such as concave or convex relative to the cooling fluid flow C. It should be further appreciated that the dimple 160 can be a combination of any shape of the heads, tails, or any combination thereof as described herein in order to provide enhanced cooling along the cooling surface 152 while minimizing dust collection along the engine component 140.

It should be appreciated that application of the disclosed design is not limited to turbine engines with fan and booster sections, but is applicable to turbojets and turbo engines as well.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A component for a turbine engine, which generates a hot combustion gas flow, and provides a cooling fluid flow defining a cooling fluid flow path, comprising:
   a wall separating the hot combustion gas flow from the cooling fluid flow and having a hot surface along with the hot combustion gas flow and a cooling surface facing the cooling fluid flow; and
   at least one dimple provided in the cooling surface and having a head and a tail with the head having a greater depth and disposed upstream of the tail relative to a flow direction of the cooling fluid flow.
2. The component of clause 1, wherein the at least one dimple includes multiple dimples.
3. The component of clause 1 or 2, wherein the multiple dimples are staggered relative to the cooling fluid flow path.
4. The component of any preceding clause, wherein the dimple is symmetrical about a cavity body axis extending in the flow direction.
5. The component of any preceding clause, wherein the dimple has a width defined normal to the cavity body axis.
6. The component of any preceding clause, wherein the head further includes a head length in the flow direction and a ratio of width to head length is greater than 1 to 1.
7. The component of any preceding clause, wherein the ratio of width to head length is 2 to 1.
8. The component of any preceding clause, wherein the tail further includes a tail length in the flow direction and a ratio of width to tail length is greater than 1 to 2.
9. The component of any preceding clause, wherein the ratio of width to tail length is 2 to 3.
10. The component of any preceding clause, wherein the head includes a head length in the flow direction and the tail includes a tail length in the flow direction and a ratio of head length to tail length is 1 to 3.
11. The component of any preceding clause, wherein the head includes an arcuate profile and the tail has a linear profile.
12. The component of any preceding clause, wherein the head includes an arcuate profile and the tail has a non-linear profile.
13. The component of any preceding clause, wherein the non-linear tail profile is convex relative to the cooling fluid flow.
14. The component of any preceding clause, wherein the at least one dimple has a teardrop shape.
15. A component for a turbine engine having a wall separating a hot combustion gas flow and a cooling fluid flow and having at least one dimple provided in the wall confronting the cooling fluid flow and having a head and a tail with the head having a greater depth and disposed upstream of the tail relative to a direction of the cooling fluid flow.
16. The component of clause 15, wherein the dimple has a teardrop shape.
17. The component of clause 15 or 16, wherein the head includes an arcuate profile and the tail has a linear profile.
18. The component of any of clauses 15 to 17, wherein the head includes a head length and the tail includes a tail length in the cooling fluid flow direction and a ratio of head length to tail length is at least 1 to 3.
19. The component of any of clauses 15 to 18, wherein the head includes an arcuate profile and the tail has a non-linear profile.
20. A method of cooling an engine component having a cooling surface the method comprising:
   passing a cooling fluid flow along the cooling surface such that a portion of the cooling fluid flow passes through a dimple in the cooling surface having a head with a greater depth than a tail disposed upstream of the tail to retard dust collection along the cooling surface.
21. The method of clause 20, wherein the cooling fluid enters the head and passes to the tail.

## Claims

1. A component (140) for a gas turbine engine (10), which generates a hot combustion gas flow (H), and provides a cooling fluid flow (C) defining a cooling fluid flow path, comprising:
a wall (150) separating the hot combustion gas flow (H) from the cooling fluid flow (C) and having a hot surface (154) along with the hot combustion gas flow (H) and a cooling surface (152) facing the cooling fluid flow (C); and
at least one dimple (160) provided in the cooling surface (152) and having a head (162) and a tail (164) with the head (162) disposed upstream of the tail (164) relative to a flow direction of the cooling fluid flow (C).

2. The component (140) of claim 1, wherein the at least one dimple (160) includes multiple dimples (160).

3. The component (140) of claim 2, wherein the multiple dimples (160) are staggered relative to the cooling fluid flow path (160).

4. The component (140) of any preceding claim, wherein the dimple (160) is symmetrical about a cavity body axis (176) extending in the flow direction.

5. The component (140) of claim 4, wherein the dimple (160) has a width (170) defined normal to the cavity body axis (176).

6. The component (140) of claim 5, wherein the head (164) further includes a head length (172) in the flow direction and a ratio of width (170) to head length (172) is greater than 1 to 1.

7. The component (140) of claim 5 or claim 6, wherein the tail (164) further includes a tail length (174) in the flow direction and a ratio of width (170) to tail length (174) is greater than 1 to 2.

8. The component (140) of any preceding claim, wherein the head (164) includes a head length (172) in the flow direction and the tail (164) includes a tail length (174) in the flow direction and a ratio of head length (172) to tail length (174) is 1 to 3.

9. The component (140) of any preceding claim, wherein the head (162) includes an arcuate profile and the tail (164) has a linear profile.

10. The component (140) of any preceding claim, wherein the at least one dimple (160) has a teardrop shape.

11. A component (140) for a turbine engine (10) having a wall separating a hot combustion gas flow (H) and a cooling fluid flow (C) and having at least one dimple provided in the wall confronting the cooling fluid flow (C) and having a head (162) and a tail (164) with the head having a greater depth and disposed upstream of the tail (164) relative to a direction of the cooling fluid flow (C).

12. The component (140) of claim 11, wherein the dimple (160) has a teardrop shape.

13. The component (140) of claim 11 or 12, wherein the head (162) includes an arcuate profile and the tail (164) has a linear profile.

14. A method of cooling an engine component (140) having a cooling surface the method comprising:
passing a cooling fluid flow along the cooling surface such that a portion of the cooling fluid flow (C) passes through a dimple (160) in the cooling surface (152) having a head (162) with a greater depth than a tail disposed upstream of the tail to retard dust collection along the cooling surface (152).

15. The method of claim 14, wherein the cooling fluid enters the head (162) and passes to the tail (164).
